# EUROPÄISCHE PATENTANMELDUNG

(11) **EP 0 530 566 A1**
(43) Veröffentlichungstag der Anmeldung: **10.03.1993**
(21) Anmeldenummer: 92113875.6
(22) Anmeldetag: 14.08.1992
(51) Int. Cl.: G01M 3/26

(54) **Verfahren und Anordnung zur Durchführung von Lecktests bei Abgastestgeräten**

(30) Priorität: 02.09.1991 DE 4129070
(71) Anmelder: GRUNDIG E.M.V. Elektro-Mechanische Versuchsanstalt Max Grundig holländ. Stiftung & Co. KG., D-90762 Fürth (DE)
(72) Erfinder: Hallas, Ernst, Dr.rer.nat, GRUNDIG EMV Max Grundig, W-8510 Fürth (DE)
(74) Vertreter: Dreykorn-Lindner, Werner, Dipl.-Ing.

(57) **Zusammenfassung**

Die Erfindung betrifft ein Verfahren zur Durchführung von Lecktests bei Abgastestgeräten, insbesondere in Abgastestgeräten für Ottomotoren.

Diese Lecktests werden bei bekannten Verfahren durch Verschließen des Gasweges, Erzeugung von Unterdruck im Abgastestgerät und Messen des Konzentrationsverlaufes eines Vergleichsflaschengases realisiert.
Unter Berücksichtigung der Tatsache, daß im normalen Werkstattbetrieb zumindest einmal pro Tag ein Lecktest durchgeführt werden muß, stellt sich die Aufgabe ein Verfahren vorzuschlagen, bei dem ausreichende Sicherheit bei der Erkennung auch von kleinsten Lecks gegeben ist, wobei die regelmäßigen Verbrauchskosten für das Prüfgas reduziert werden sollen.
Dies wird erfindungsgemäß dadurch erreicht, daß als Prüfgas Autoabgas benutzt wird, wobei die Konzentration mindestens einer Prüfgaskomponente vor der Unterdruckerzeugung als Referenzwert bestimmt wird.

## Beschreibung

Die Erfindung betrifft ein Verfahren zur Durchführung von Lecktests bei Abgastestgeräten, insbesondere in Abgastestgeräten für Ottomotoren.

In Abgasen von Otto- und Dieselmotoren befinden sich chemische Stoffe, die entsprechend gesetzlicher Regelungen bestimmte Grenzwerte nicht übersteigen dürfen. Weiterhin lasssen sich auf Grund der Konzentration bestimmter Stoffe im Abgas fehlerhafte Motoreinstellungen erkennen und teilweise sogar genauer definieren. Aus diesen Gründen werden bereits seit längerer Zeit sowohl in Werkstätten als auch in Einrichtungen, die auf Grund gesetzlicher Vorschriften Kraftfahrzeuge auf ihren technischen Zustand untersuchen, Abgastestgeräte eingesetzt.

Aus der deutschen Offenlegungsschrift DE 3414542 A1 ist eine Vorrichtung zur Messung des Anteils von Rußpartikeln im Abgas von Dieselmotoren bekannt. Dort werden die einen Abgaskanal durchströmenden Abgase gemessen. Der Abgaskanal ist als Stömungsmischkanal ausgebildet, an dessen einem Ende sowohl das Abgas als auch das Mischgas eingeführt wird, und an dessen anderem Ende eine Pumpe angeordnet ist, die das Abgas-Mischgas-Gemisch ansaugt. Derartige Pumpen zum Ansaugen des Abgases sind auch in Abgastestgeräten für Ottomotoren bekannt. Sie saugen das Abgas mit einer annähernd konstanten Pumpleistung in die Messanordnung.

Für die Abgassonderuntersuchung ( ASU ) von Kraftfahrzeugen mit geregeltem Katalysator ist es wichtig, eine genaue Messung der Kraftstoff/Luft - Gemischzusammensetzung zu gewährleisten Die Berechnung dieser Gemischzusammensetzung erfolgt bekannterweise durch Berechnung aus dem Sauerstoffgehalt im Abgas. Aus diesem Grund ist es notwendig, diesen Sauerstoffgehalt genau zu bestimmen, und Faktoren, welche die Meßergebnisse verfälschen können, weitestgehend auszuschließen. Eine besondere Bedeutung kommt hierbei den Prüfungen auf Lecks in der Meßanordnung zu.

Es ist bekannt Lecktests durchzuführen, indem die Meßsonde beispielsweise mittels eines Ventiles verschlossen wird, während mit der im Meßgerät vorhandenen Pumpe oder mit einer separaten Pumpe Unterdruck erzeugt wird. Dieser Unterdruck wird gemessen. Zur Auswertung wird beispielsweise festgestellt, ob bei einer definierten Pumpleistung ein bestimmter Unterdruck erzeugt werden kann oder ein vorgebbarer Unterdruck innerhalb einer bestimmten Zeit erreicht wird. Bei der Bestimmung des Sauerstoffgehaltes im Abgas müssen aber auch kleinste Lecks erkannt werden, da sie das Meßergebnis in nicht vernachlässigbarer Weise verfälschen würden. Bei der oben beschriebenen Meßmethode, bei der die Gasführung und die Saugleistung der Pumpe einen wesentlichen Einfluß auf das Meßergebnis haben, kann die notwendige Genauigkeit nur eingeschränkt und mit großem Aufwand erreicht werden.

Höhere Zuverlässigkeit bei der Erkennung von Lecks wird bei bekannten Lecktestmethoden erreicht, bei denen ein im wesentlichen sauerstoffreies Prüfgas in die zu testenden Teile des Abgasmeßgerätes eingebracht wird. Anschließend wird durch Abpumpen ein Unterdruck erzeugt und der Verlauf der Gaskonzentration in der Messzelle gemessen. Bei Vorhandensein eines Lecks wird durch den Unterdruck Luft in das Abgasmeßgerät gesaugt, wodurch sich der relative Anteil des Prüfgases im Abgasmeßgerät verringert. Als Prüfgas wird Flaschengas mit einer definierten Zusammensetzung verwendet, wobei der Anteil an Sauerstoff gering sein sollte. Mit dieser Testmethode lassen sich bereits sehr kleine Lecks erkennen, jedoch ist bei dieser Testmethode ein zusätzliches Prüfgas notwendig, wodurch zusätzliche regelmäßige Verbrauchskosten entstehen.

Aus der deutschen Offenlegungsschrift DE-OS 20 09 197 ist ein Dichtigkeitsprüfverfahren, insbesondere für Kraftstofftanks bekannt, bei dem der zu prüfende Behälter in eine dichte Kammer eingesetzt wird und mit einem Prüfgas gefüllt wird. Die Kammer wird dann mit einem Spülgas durchgespült, das nach seinem Austritt aus der Kammer einem Analysator zugeführt wird, in dem das Spülgas auf Spuren des Prüfgases hin analysiert wird.

Aus dem Dokument US 48 76 530 ist eine Anordnung zur Detektion von Lecks in unterirdischen Gasbehältern bekannt, bei der um den Tank Meßsonden angebracht sind, die entwichenes Gas detektieren, wobei die Auswertung von einem Mikroprozessor durchgeführt wird, dem die Meßwerte über einen Analog/Digitalwandler zugeführt werden, wobei der Mikroprozessor mit einer Speichereinheit und einer Anzeigeeinheit zum Speichern und Anzeigen von alarmrelevanten Daten verbunden ist.

Unter Berücksichtigung der Tatsache, daß im normalen Werkstattbetrieb zumindest einmal pro Tag ein Lecktest durchgeführt werden muß, stellt sich die Aufgabe ein Verfahren und eine Anordnung zur Durchführung des Verfahrens vorzuschlagen, bei dem ausreichende Sicherheit bei der Erkennung von Lecks gegeben ist, wobei die regelmäßigen Verbrauchskosten reduziert werden sollen.

Diese Aufgabe wird gemäß der Erfindung gelöst, indem dem Abgastestgerät über die Meßsonde das Abgas eines Kraftfahrzeuges als Prüfgas zugeführt wird, wobei die Konzentration mindestens einer im Abgas enthaltenen Gaskomponente mit einem entsprechenden Meßgerät bestimmt wird. Wenn die zu überprüfenden, gasführenden Teile des Abgasmeßgerätes mit dem Abgas gefüllt sind, wird die Meßsonde abgesperrt und mittels einer im Abgastestgerät in der Regel enthaltenen Pumpe, ansonsten mit einer separat dafür vorgesehenen Pumpe, Unterdruck erzeugt. Nun wird über einen vorbestimmbaren Zeitraum die Gaskonzentration hinsichtlich mindestens einer Gaskomponente, die auch bereits vorher im Abgas bestimmt wurde, überwacht. Stellt sich eine Veränderung der überwachten Gaskomponente über einen vorgebbaren Grenzwert hinaus ein, dann wird ein Leck erkannt. Der vorgegebene Grenzwert ist vorzugsweise ein relativer Wert, bezogen auf die vorher gemessene Konzentration des als Prüfgas verwendeten Abgases bzw. auf die Konzentration mindestens einer im Abgas enthaltenen Gaskomponente.

Der Vorteil des erfindungsgemäßen Verfahrens liegt zum einen in der Einsparung von Verbrauchsmaterial durch die Verwendung des Autoabgases als Prüfgas und zum anderen in der einfachen Handhabung, da die vorhandene Meßsonde, die für den Abgastest an den Auspuff eines Kraftfahrzeuges angeschlossen wird, auch bei dem Lecktest verwendet wird. Ein besonderes Verbindungsstück zum Anschluß an eine Gasflasche entfällt. Es ist lediglich an der Meßsonde ein Ventil vorzusehen, mit dem die Absperrung des Gasweges erfolgt. Ein weiterer Vorteil des erfindungsgemäßen Verfahrens liegt darin, daß im Gegensatz zu den bisher bekannten Lecktests die Überprüfung auch auf den Sondenschlauch ausgedehnt ist.

Eine vorteilhafte Ausgestaltung der Erfindung sieht vor, daß die Messung der Konzentration der Gaskomponente oder der Gaskomponenten bei Unterdruck, also nach Absperrung der Gaszufuhr, erst dann durchgeführt wird, wenn der Unterdruck eine vorgegebene Grenze unterschritten hat. Auf diese Weise wird gewährleistet, daß die Messung erst erfolgt, wenn die äußeren Bedingungen erfüllt sind.

Zusammen mit einer weiteren vorteilhaften Ausgestaltung der Erfindung, welche vorsieht, daß bei Unterschreiten des Unterdrucks unter eine zweite, vorgegebene Grenze der Unterdruck nicht weiter verstärkt wird, wird der Unterdruckbereich, in dem vorteilhafterweise gemessen wird, nach oben und unten eingegrenzt.

Gemäß einer weiteren vorteilhaften Ausgestaltung der Erfindung wird als zu überwachende Gaskomponente die Sauerstoffkonzentration bestimmt. Durch den geringen Anteil an Sauerstoff im Prüfgas, d.h. im Abgas, kann bereits ein kleines Leck, das nur wenig Sauerstoff aus der Umgebung eindringen läßt, erkannt werden.

Eine weitere Gaskomponente, die eine sehr gute Auswertung erlaubt, ist CO₂. Bei Vorhandensein eines Lecks sinkt durch die Zufuhr des Sauerstoffes aus der Umgebung der CO₂ - Gehalt.

Zur Erhöhung der Auswertesicherheit ist es vorteilhaft, beide Gaskomponenten zu bestimmen. Die Auswertung kann so erfolgen, daß entweder eine der beiden Gaskomponenten oder beide Gaskomponenten bei der Messung unter Unterdruck ihre Konzentration über einen vorgegebenen Grenzwert hinaus verändert haben müssen, damit Alarm gegeben wird.

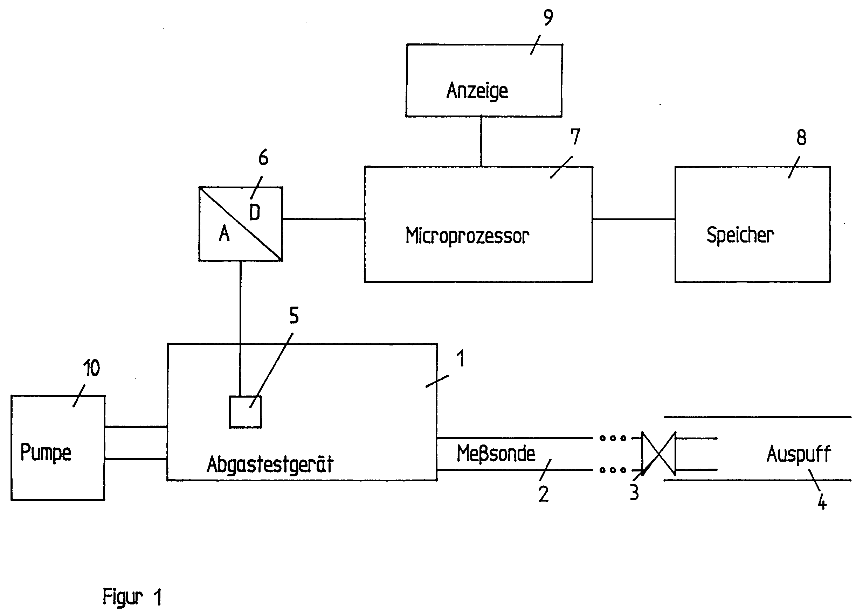

Im folgenden wird die Erfindung an Hand eines Ausführungsbeispiels nach Figur 1 erläutert.

Diese Figur zeigt ein Abgastestgerät 1 mit einer Meßsonde 2, die ein Ventil 3 enthält, und einer Pumpe 10, die entweder im Abgasmeßgerät vorhanden oder separat angeschlossen ist. Die Meßsonde 2 ist in das Endstück eines Auspuffes 4 eingebracht. Im Inneren des Abgastestgerätes 1 ist im Gasführungsweg eine Gasmeßsonde 5 angebracht. Diese Gasmeßsonde 5 ist mit einem A/D-Wandler 6 verbunden, der außerdem mit einem Mikroprozessor 7 verbunden ist. Der Mikroprozessor 7 ist mit einer Speichereinheit 8 und mit einer Anzeigeeinheit 9 verbunden.
Zu Beginn eines Lecktestes ist das Ventil 3 geöffnet, so daß die Auspuffgase vom Auspuff 4 über die Meßsonde 2 in das Abgastestgerät geführt werden, bzw. durch die im Abgasmessgerät enthaltene oder separat angeschlossene Pumpe 10 angesaugt werden. Wenn alle Gasführungswege des Abgastestgerätes 1 mit dem Abgas gefüllt sind, wird die Bestimmung ein oder mehrerer Gaskomponenten mit dem Sensor 5 durchgeführt. Die gemessenen Werte werden über den Analog/Digitalwandler 6 an den Mikroprozessor 7 gegeben. Die gemessenen Werte werden im Speicher 8 abgelegt und gegebenenfalls an der Anzeigeeinheit 9 dargestellt. Wenn der Messvorgang abgeschlossen ist, wird dies ebenfalls an der Anzeige 9 dargestellt. Nun kann von einem Bediener das Ventil 3 geschlossen werden. In einer vorteilhaften Ausgestaltung kann das Ventil 3 über ein elektrisches Stellglied vom Mikroprozessor 7 direkt geschlossen werden. Die Pumpe 10 arbeitet weiter und erzueugt im Gasführungsweg einen Unterdruck. Die Sonde 5 mißt die Gaskonzentration laufend, wobei über den Analog/Digitalwandler 6 die Meßwerte an den Mikroprozessor 7 gegeben werden, der sie mit den im Speicher 8 abgelegten Meßwerten, die ohne Unterdruck bestimmt wurden, vergleicht.

Alle Meßwerte können im Speicher 8 abgelegt werden, um für eine spätere Auswertung zur Verfügung zu stehen. In der erfindungsgemäßen Anordnung kann weiterhin ein Drucksensor vorgesehen sein, der mit dem Mikroprozessor 7 über einen weiteren Analog/Digital-Wandler verbunden ist. Durch die Druckaufnahme kann eine obere und eine untere Grenze des Unterdruckes im Gasführungsweg vorgegeben werden, so daß eine Messwertauswertung nur in einem vorgebbaren Unterdruckbereich ausgeführt wird.

## Patentansprüche

1. Verfahren zur Durchführung von Lecktests in Abgastestgeräten, insbesondere in Abgastestgeräten für Ottomotoren, durch Messung der Konzentrationsveränderung eines Testgases im abgeschlossenen Raum bei Unterdruck, **dadurch gekennzeichnet**, **daß**
- dem Abgastestgerät über die Meßsonde das Abgas eines Kraftfahrzeuges zugeführt wird,
- die Konzentration mindestens einer der im Abgas enthaltenen Gaskomponenten bestimmt wird,
- der Gasweg im Bereich der Meßsonde abgesperrt wird,
- durch eine im Abgasmessgerät enthaltene oder separate Pumpe ein Unterdruck in den gasführenden Teilen des Abgasmeßgerätes erzeugt wird,
- die Konzentration der vorher bestimmten Gaskomponenten nach einer vorgebbaren Zeit erneut gemessen wird und bei einer Veränderung mindestens einer Gaskomponente um einen bestimmten Wert ein Leck erkannt und signalisiert wird.

2. Verfahren nach Anspruch 1, **dadurch gekennzeichnet**, daß die Messung der Konzentration der Gaskomponenten erfolgt, wenn der Unterdruck eine vorgebbare Grenze überschritten hat.

3. Verfahren nach Anspruch 1 oder Anspruch 2,**dadurch gekennzeichnet**, daß der Unterdruck bei Erreichen einer zweiten vorgebbaren Grenze nicht weiter erhöht wird.

4. Verfahren nach einem oder mehreren der Ansprüche 1 bis 3, **dadurch gekennzeichnet**, **daß** die Konzentration der Gaskomponente Sauerstoff bestimmt wird.

5. Verfahren nach einem oder mehreren der Ansprüche 1 bis 3, **dadurch gekennzeichnet**, **daß** die Konzentration der Gaskomponente CO₂ bestimmt wird.

6. Verfahren nach einem oder mehreren der Ansprüche 1 bis 3, **dadurch gekennzeichnet**, **daß** die Konzentration der Gaskomponenten Sauerstoff und CO₂ bestimmt werden.

7. Anordnung zur Durchführung von Lecktests in Abgastestgeräten, insbesondere in Abgastestgeräten für Ottomotoren, durch Messung der Konzentrationsveränderung eines Prüfgases im abgeschlossenen Raum bei Unterdruck, mit einem Mikroprozessor (7), der mit einem Speicher (8) und einer Anzeigeeinheit (9) und einem Analog/Digitalwandler (6) verbunden ist, **dadurch gekennzeichnet**, **daß** die Anordnung
- eine Meßsonde (2) mit einem Ventil (3), das es erlaubt für den Lecktest die Abgaszufuhr abzusperren,
- eine Pumpe (10) zur Erzeugung von Unterdruck im Gasführungsweg, und
- mindestens einen Gassensor (5) im Gasführungsweg des Abgastestgerätes (1) enthält, wobei die im Gassensor (5) gemessenen Werte über den Analog/Digitalwandler (6) dem Mikroprozessor (7) zugeführt werden.
